(19) Europäisches Patentamt
European Patent Office
Office européen des brevets

(11) **EP 2 894 947 A1**

(12) **EUROPEAN PATENT APPLICATION**

(43) Date of publication:
**15.07.2015 Bulletin 2015/29**

(51) Int Cl.:
***H05B 37/02*** (2006.01)        ***F21S 8/00*** (2006.01)

(21) Application number: **14151198.0**

(22) Date of filing: **14.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **RSTJ Systems Limited**
**Lingfield, Surrey RH7 6AW (GB)**

(72) Inventor: **Whitehead, Richard**
**Lingfield, Surrey RH7 6AW (GB)**

(74) Representative: **Pearce, David Henry**
**Barker Brettell LLP**
**100 Hagley Road**
**Edgbaston**
**Birmingham B16 8QQ (GB)**

(54) **Lighting Controller**

(57)    A lighting controller (400), comprising a light sensing module (402), a control module (404) and a processor (405). The light sensing module (402) receives ambient light and provides a modulation signal indicating a degree of modulation of the received ambient light and a luminance signal indicating a brightness of the ambient light. The control module (404) controls operation of a lamp. The processor (405) receives the modulation and luminance signals from the light sensing module (402) and operates the control module (404) dependent on the received signals.

FIG. 4

**EP 2 894 947 A1**

## Description

## Field of the Invention

The invention relates to automatic control of artificial lighting.

## Background

According to an ongoing study by the US Energy Information Administration, one fifth of total site energy is consumed by lighting in commercial buildings, and more site electricity is consumed for lighting than for any other end use (see Reference 4). Much of this energy is wasted. Lamps in communal areas are typically left on all day when they may only be needed at night. All the lamps in a typical office are often switched together so they may all be switched on when only some are needed. Office workers rarely turn lamps on and off as lighting conditions change due to the weather.

Existing approaches to saving lighting use tend to fall into one of the following categories:

- Complex systems including multiple light sensors and a controller connected to individual lamps via a communication channel. These are expensive and require expert installation and configuration.
- Combined light sensors and movement detectors that switch off a lamp. These have been found to be effective for corridors and other infrequently used spaces, but they are less suitable for office spaces where they can cause the lights to be turned off inappropriately. If used in an office space, typically a dozen or more lamps would be under the control of one sensor; the sensor would be placed away from windows to ensure the lamps furthest into the room do not switch off when needed, but this means that the lamps near the windows are kept on even when there is enough natural light.
- Light sensing systems that dim the lamps to achieve a constant degree of illumination. These have been found to require expert design in order to work properly, often including computer modelling of the spaces to be lit.

In addition, in certain situations it has been found to be advantageous to control the colour and/or the "quality" of lighting. For example, people suffering from Seasonal Affected Disorder report that daylight has a positive effect on their mood. In such situations it is helpful to allow as much daylight into the environment as possible, but it will also be important to quickly and automatically turn on artificial lights if the level of daylight falls.

In addition, when the colour of a product such as paint, fabric or gem stones is being evaluated there is a need to determine whether the lighting is of adequate colour quality. Daylight will be used where possible, with additional artificial lighting if necessary, but some determination may be needed as to the quality of light available for the colour evaluation.

JP2004234910 discloses an illumination control device in which constant illuminance is controlled by detecting the variation of reflectivity of an irradiation surface to determine a brightness level.

JPH11339972 discloses a lighting system for setting a target illuminance, in which an optical sensor in a luminaire is used to detect illuminance and a control means used to decide the target illuminance on the basis of detected illuminance to control the output of the light source.

JPH0896968 discloses a lighting system for saving energy, in which a sensor unit with a pyroelectric element is used to detect a human body, a control unit discriminates whether a detected person is passing through or stops within a detected region, and a luminaire is controlled so that an illuminance detecting signal from an illuminance sensor unit achieves a predetermined level.

WO 2008/122847 A1 discloses a light sensor within a display, in which a mobile communication device with a display is configured to apply pulse width modulation (PWM) signals to light emitting diodes (LEDs) for providing backlighting for the display, ambient conditions being monitored during off periods of the PWM signals applied to the LEDs and the PWM signals being adjusted based on the monitored ambient light conditions.

In summary, existing methods and systems for light control tend to be overly complicated, expensive or insufficiently responsive to changing light conditions.

It is an object of the invention to address one or more of the above mentioned problems.

## Summary of the Invention

In accordance with a first aspect of the invention there is provided a lighting controller comprising:

a light sensing module for receiving ambient light and providing a modulation signal indicating a degree of modulation of the received ambient light and a luminance signal indicating a brightness of the ambient light;

a control module for controlling operation of a lamp; and

a processor arranged to receive the modulation and luminance signals from the light sensing module and to operate the control module dependent on the received signals.

Advantages of the invention include the lighting controller being potentially very inexpensive, the control of individual lamps or groups of lamps being greatly simplified, and the controller not requiring any special installation. The controller can be used to turn a single lamp or a group of lamps into an independent energy-saving device, turning the lamp(s) off when there is sufficient daylight, thereby saving money and reducing the environmental impact of lighting. The controller would be particularly effectively employed for lamps near windows or in other places where there is likely to be sufficient natural light for at least some of the time, such as in atria, forecourts and offices having large external windows.

The processor may be configured to provide a signal to the control module to disable operation of the lamp when the received luminance signal is above a predetermined luminance threshold and the received modulation signal is below a modulation threshold. A situation where the luminance value is above a threshold and the determined modulation of light as sensed is below a threshold corresponds to where there is sufficient daylight because the apparent modulation is reduced.

The processor may be configured to provide a signal to the control module to enable operation of the lamp when the luminance signal is below the predetermined luminance threshold. The decision to turn on the lamp does not need to rely on a measure of modulation of the light, since the measured light is either from daylight or from other artificial lights not controlled by the lighting controller.

The control module may comprises a switch that may typically be operable in either an on or off state, or alternatively may be operable over a range of states between fully on or fully off. The control module may for example be operable in an intermediate state by altering the duty cycle of a control signal provided by the processor to the control module, thereby providing a dimming function.

The processor may be configured to compare the modulation and luminance signals to a threshold defined by a relationship between modulation and luminance that divides a two dimensional space into first and second regions, the processor being configured to provide a signal to disable operation of the lamp when a point in the two dimensional space defined by the modulation and luminance signals lies within the first region and to provide a signal to enable operation of the lamp when a point in the two dimensional space defined by the modulation and luminance signals lies within the second region. An advantage of defining the thresholds in a two dimensional space is that more account can be taken of different types of lamps, or lamps being operated in different states, as the degree of modulation as well as the total measured luminance can change.

The threshold may comprises first and second thresholds defining a third region between the first and second thresholds, wherein the processor is configured to maintain the lamp in its current operational state when a point in the two dimensional space defined by the modulation and luminance signals lies within the third region. An advantage of the third region is to provide a degree of hysteresis in the control, so that the lamp is not switched on and off rapidly under rapidly fluctuating light conditions.

The processor may be configured to repeatedly sample the modulation and luminance signals and provide a signal to the switching module dependent on the sampled modulation and luminance signals. The processor may be configured to sample the modulation and luminance signals a plurality of times over each half cycle of an alternating mains voltage signal.

The processor may be configured to maintain a current state of the lamp when the modulation signal is above a predetermined upper modulation limit or when the luminance signal is above a predetermined upper luminance limit. Defining upper limits prevents the lighting controller from switching the lamp when signals are outside of a normal range, indicating that the light sensing module is saturated.

The processor may be configured to perform a bandpass filtering operation on the modulation signal to select a frequency of interest. The frequency of interest may be twice a mains frequency, for example 100Hz or 120Hz.

The filtering operation may comprise performing a windowed Fourier transform.

In accordance with a second aspect of the invention there is provided a method of operating a lamp, the method comprising:

    providing a lighting controller according to the first aspect, the lighting controller connected to the lamp;
    receiving ambient light by the light sensing module providing a modulation signal indicating a degree of modulation of the received ambient light and a luminance signal indicating a brightness of the ambient light by the light sensing module;
    receiving the modulation and luminance signals from the light sensing module by the processor; and
    operating the control module by the processor to controlling operation of the lamp.

In accordance with a third aspect there is provided a method of calibrating a lighting controller according to the first aspect, the method comprising:

    connecting the lighting controller to a lamp and to a computer via an interface;
    adjusting an amount of natural light sensed by the light sensing module while the lamp is switched off and switched on;
    identifying points on a two dimensional space of modulation and luminance;
    defining a first region and a second region on the two-dimensional space within the identified points to determine thresholds for controlling operation of the lamp; and
    programming the thresholds into the lighting controller by the computer.

In accordance with a fourth aspect there is provided a lighting quality indicator device, comprising:

a light sensing module for receiving ambient light and providing a modulation signal indicating a degree of modulation of the received ambient light and a luminance signal indicating a brightness of the ambient light;
an display module arranged to display an indication of the quality of the ambient light; and
a processor arranged to receive the modulation and luminance signals from the light sensing module and to control the indicator dependent on the received signals.

The display module may be configured to display a quantitative or qualitative measure of the modulation of the received ambient light determined by the processor.

The measure of the modulation of the received ambient light may be determined as a proportion of the total luminance, or as an absolute value.

The light sensing module may comprise colour sensing elements, and be operable to provide a signal to the processor, indicating the colour of the ambient light.

The display module may be configured to display a quantitative or qualitative measure of the colour of the ambient light determined by the processor.

Optional features according to the first aspect may also be applied to the second, third or fourth aspects.

**Detailed Description**

Aspects and embodiments of the invention are described in further detail below by way of example and with reference to the enclosed drawings in which:

Figure 1 is a plot of luminance as a function of time for a typical fluorescent lamp;

Figure 2 is a plot of measured modulation as a function of brightness for various illuminated scenes;

Figure 3 is a plot of modulation range (arbitrary units) as a function of brightness for different types of lamps;

Figure 4 is a schematic block diagram of a lighting controller according to an exemplary embodiment;

Figure 5 is a schematic software block diagram illustrating operation of a processor for use with an exemplary lighting controller;

Figure 6 is an example of a measured light modulation signal;

Figure 7 is a window function for sampling a light modulation signal;

Figure 8 is a plot of frequency response of a band-pass filter using the window function of figure 7;

Figure 9 is a plot of brightness (luminance) and modulation thresholds for use in an exemplary lighting controller;

Figure 10 is a flow diagram of an exemplary decision logic for a lighting controller;

Figure 11 is a schematic diagram indicating a preferred arrangement for sensor and lamp coverage;

Figure 12 is a schematic diagram of an exemplary collimator assembly;

Figure 13 is a schematic block diagram of an isolator board;

Figure 14 is a schematic diagram of an arrangement for calibration of a lighting controller; and

Figures 15 and 16 are diagrams illustrating a visual representation of a calibration process for setting lamp on and off regions on a plot of lamp light versus total light.

The following description assumes that the lighting controller is connected to, or built into, a fluorescent lamp assembly. Incandescent and LED lamps should also be suitable in principle, although controllers with slightly different parameters may be required, as described later.

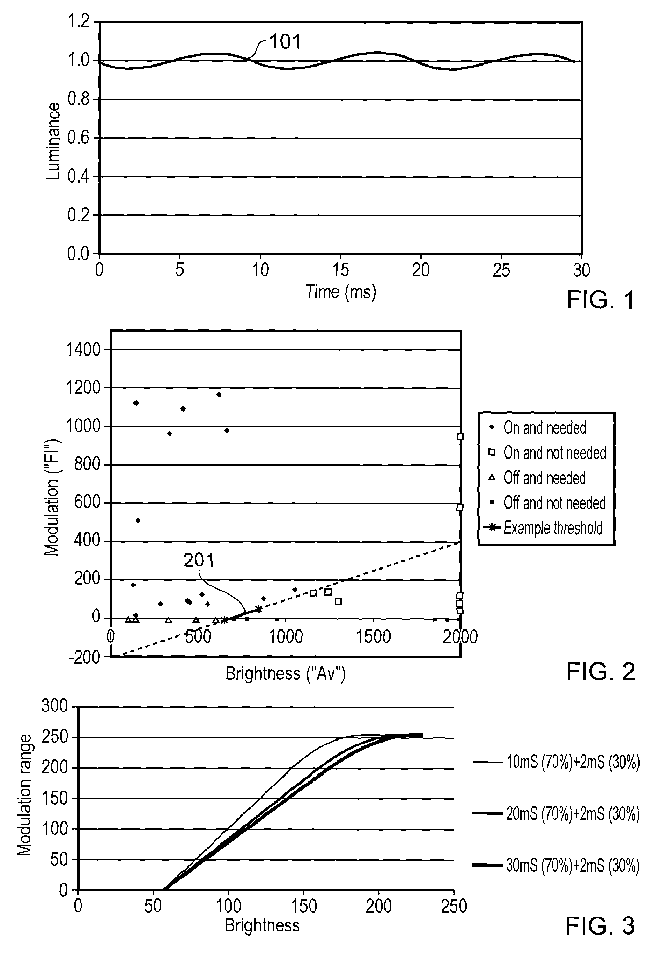

The light emitted by all fluorescent lamps varies slightly in time with the mains electricity, as shown in figure 1. This variation in luminance 101 (termed modulation) is at twice the frequency of the mains supply. In Europe, where the mains frequency is nominally 50Hz, the modulation will be around 100Hz, whereas in the USA where the mains frequency is nominally 60Hz the modulation will be around 120Hz. This modulation is not visible to the human eye, being both too fast and too small to be perceived. It is not to be confused with the visible "flicker" seen in lamps that are failing or that are powered from a very poor power supply.

Measurements taken from a number of different lamps (such as domestic high-efficiency bulbs and commercial ceiling luminaires) show that the degree of modulation varies little from lamp to lamp, being typically around 5%. A further discussion of the effect of any variation between lamps is provided below.

If a scene is lit entirely with artificial light then modulation of the light reflected from that scene will be 5%, i.e. the actual degree of modulation of the artificial light. If the scene is lit entirely by natural light then there will be no detected modulation in the light reflected from it. Therefore, with a mixture of natural and artificial light, the modulation will lie be between these values, depending on the relative contributions of natural and artificial light. For example, if light with a 4% modulation is detected, then it may be determined that around 80% of that light must be artificial light (assuming a 5% modulation with 100% artificial light) with the other 20% from daylight (with no modulation). From this basis, it is possible to work out how much daylight is being detected from an area of interest by effectively rejecting the artificial light, and thereby determining how well illuminated the scene would be if all artificial light was to be turned off. If the scene would still be sufficiently illuminated with natural light alone, the artificial light can be turned off.

In order to investigate whether this concept would work in practice, an analogue test box was constructed. The test box was used to measure the brightness and degree of modulation of light in several shops, offices and public spaces in a nearby town. The results are indicated in figure 2 in the form of modulation (in arbitrary units derived from a meter reading) as a function of brightness. Also indicated in Figure 2 is a "threshold" line 201, which was created by drawing a line to separate those points representing situations in which the lamp needed to be on from those where it did not need to be on. It can be seen that it was possible to successfully draw such a line 201 (with the exception of the points on the right side of the graph where the electronics of the test box were overloaded by high brightness levels), which completely separates situations where the lamps needed to be on from those where it did not, despite the wide variety of lamp types and situations in which they were installed.

The microcontroller design described below was then developed, but the results were initially disappointing. To investigate this, a computer simulation of the lamp, the sensor's electronics and its software was written. This revealed that the system was very sensitive to 50Hz mains hum, a little of which is present in the light signal and some of which was picked up in the electronics. To counter this, a very high performance software band-pass filter was designed, as described below.

The software simulation also enabled the effects of different lamps to be investigated. Although the measurements showed little variation between lamps, published research (see for example Reference 1) indicates that a range of lamp parameters may be found. For example in the case of fluorescent lamps, the dominant factor is the time-constants of the phosphors that coat the tube. During the part of the mains cycle where power flows through the tube, a plasma is created in the tube which emits radiation that stimulates the phosphors. During the brief period between mains half-cycles when this plasma is not energised, the light from the phosphors decays, with a time constant that depends on its chemical make-up, until the plasma is again energised. In practical lamps, a mixture of between one and three phosphors is used, with different colours and also different time constants. A computer model of a fluorescent lamp was developed consisting of an energy signal proportional to the square of the mains voltage, and two phosphors represented as first order low-pass filters energised by this energy, the final lamp light signal being a weighted sum of the two phosphor outputs. This light signal was added to a constant signal representing daylight and this was then input to a simple model of the electronics of the test box. This computer model of a lamp and the sensor electronics was found to produce a signal very similar to signals actually measured; for a typical fluorescent tube, the best match consisted of one phosphor with 20ms time constant and another with 2ms time constant, added in the proportion 70% and 30% respectively. Figure 3 shows the effect of adjusting one of the time constants in the computer model. In this graph, the brightness of the simulated lamp light is being altered while the amount of daylight is maintained unchanged, and the resulting modulation signal is plotted against the lamp brightness. It can be seen that the measured modulation is only slightly affected by the change of lamp parameters. This result is a further confirmation of the result found with the test box, that lamp characteristics have little effect on the measured modulation.

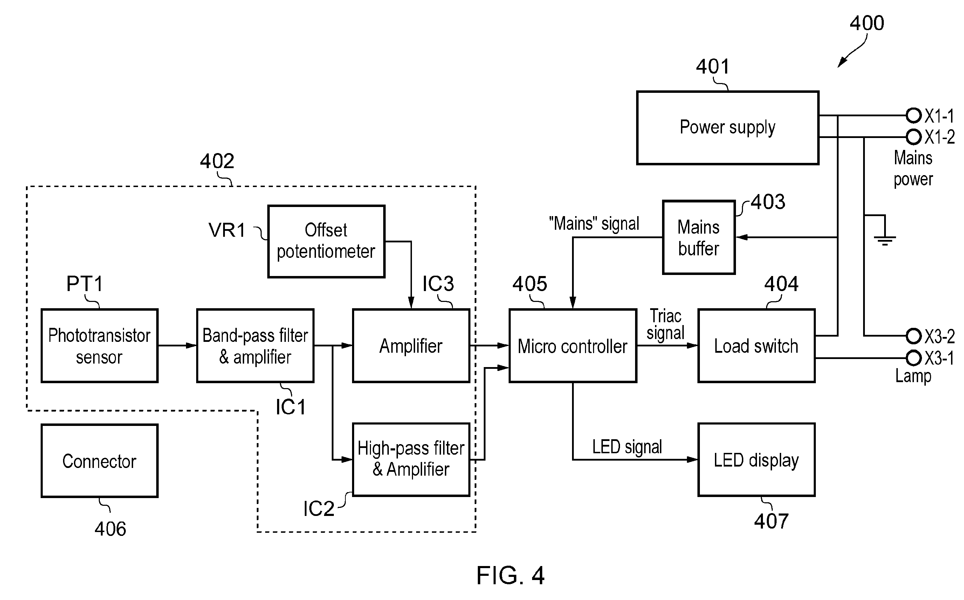

A schematic diagram of an exemplary lighting controller is shown in figure 4. The lighting controller 400 comprises a power supply module 401, a light signal module 402, a mains signal module 403, an output control module 404, a microcontroller/processor module 405, an input/output module 406 and an indicator module 407.

In the embodiment shown in figure 4, the power supply module 401 is powered from an AC mains supply via connections X1-1, X1-2. In alternative embodiments the lighting controller 400 may be powered by a battery, by DC power from a remote controller or other source, or by connection to a computer for example by USB, although for most applications it is expected that a mains voltage supply will be readily available. The power supply provides a regulated DC output and is preferably at least one of: low cost, low power and a reactive type design.

The light sensor PT1 in the light signal module 402 detects light from the scene, and converts this to an electrical signal. The signal from light sensor PT1 is amplified and filtered by amplifier IC1. The output from band pass filter and amplifier IC1 is received at amplifier IC3, where it is summed with an offset signal to produce a luminance signal, The offset signal is produced by a variable resistor VR1. The offset signal provides a DC offset into the luminance signal output from amplifier IC3, effectively allowing a user to alter the illumination threshold at which the lamp will turn on and off. Any ripple present in the luminance signal output from amplifier IC3 can be removed in software.

The output of amplifier IC1 is also provided to high pass filter and amplifier IC2, which separates the modulation signal from the luminance signal, and amplifies it.

A "mains" signal, which is used to synchronise the software to the mains, is preferably synthesised by a mains signal module (or mains buffer) 403, which divides down and filters the mains voltage so that it can safely be applied to the microcontroller. This voltage signal is used by the microcontroller/processor 405 to synchronise detection of a modulation signal in a detected light signal.

A processor 405 is configured to sample, digitally filter and process luminance and modulation signals received by processor 405. The processor 405 uses these signals to determine whether a lamp, connected to output connections X3-2, X3-1 in output control module 404, should be on, off, or in another intermediate state, as described in the software design description provided below. The processor 405 preferably comprises a low cost microcontroller such as a PIC microcontroller, with an analog to digital converter, comparator inputs and digital outputs.

The output switching module (or load switch) 404 comprises a triac that is operable to switch mains power to the lamp. The processor 405 provides a signal to control the output switching module 404.

The connector of the optional I/O module 406 is arranged to connect the microcontroller 405 to an isolator board for use during calibration and programming, as described in more detail below.

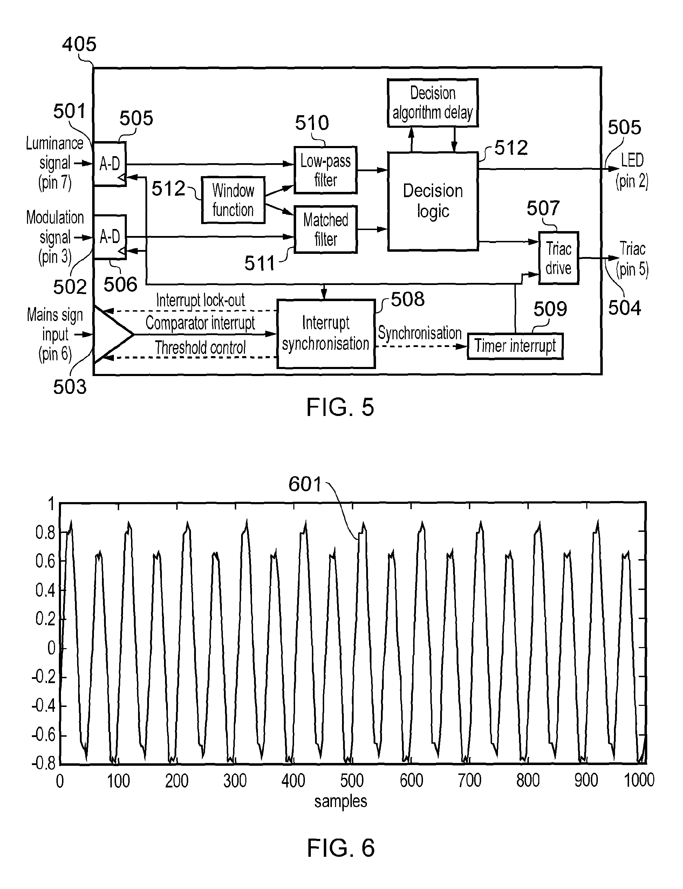

A block diagram of a preferred configuration of the processor 405 is shown in Figure 5. The processor 405 received a luminance signal at a first input 501 and a modulation signal at a second input 502, identified as pins 7 and 3 respectively in figure 5. The mains signal provided by the mains voltage module 403 is provided at a third input 503, identified as pin 6 in figure 5. The processor 405 comprises a first output 504, identified as pin 5 in figure 5, for providing a control signal to the output switching module 404. An optional second output 505 may be provided for providing a signal to an indicator module 407, which may for example comprise one or more indicators such as an LED that are lit according to the state of the control signal. The indicator LED may for example be lit when the processor is in a 'power saving' mode, i.e. when the processor 405 determines that there is sufficient daylight to enable the artificial light to be turned off. The indicator thereby provides an indication that the lighting controller 400 is operational, as it might otherwise be assumed that the lighting has failed.

In an exemplary embodiment, the timer interrupt routine 509 cycles around the following three actions, resulting in each action being performed 10 times every mains half cycle when the timer interrupt is produced 30 times every half cycle (which corresponds to every 1 ms on 50 Hz mains):

   1. Begin sampling of the modulation signal, using first A/D converter 505;
   2. Begin sampling of the luminance signal using second A/D converter 506 *and* if the lamp should be on then send the triac output high via triac drive 507 and output 504;
   3. Send the triac output 504 low.

Hence, when the lamp should be on the triac output 504 is pulsed high for 10 times per half-cycle with a mark-space ratio of 1/3, if each action is carried out within a single timer interrupt cycle. Sampling rates higher or lower than 10 times per half-cycle would be practicable; in theory only 2 samples per half-cycle are required for signal measurement but in practice at least 4 were found to be more appropriate for a measurement, and at least 8 samples per half-cycle were required for stable operation of the interrupt synchronisation as described below.

In a general aspect therefore, the processor 405 may be configured to repeatedly sample the modulation and luminance signals derived from the light signal by the light signal module 402 and provide a signal at an output connected to the light control module 404 dependent on the sampled modulation and luminance signals.

The timer interrupt 509 can start A-D sample readings using the A-D converters 505, 506 as described above. When the A-D reading is complete an A-D interrupt is generated, which can then be used to record the A-D value for processing by the main routine.

An interrupt is generated when the mains comparator input 503 changes sign. The interrupt routine 509 records the timer's value when this interrupt occurs. The main routine 508 then compares this value against the expected time and adjusts the speed of the timer interrupts to maintain synchronisation.

Because the mains signal can be quite noisy, spurious comparator interrupts may sometimes be generated unless otherwise controlled for. The processor 405 may for example be configured to protect itself from disruption by such spurious interrupts in one or more of the following ways:

   1. By altering the comparator's threshold level in the interrupt routine to provide hysteresis on the input;
   2. By disabling the comparator interrupt until just before it is expected; or
   3. By checking that the half-cycle time measured is in a reasonable range; if not then the measurement is discarded.

A typical light modulation signal 601 is shown in figure 6. With a mains frequency of nominally 50Hz, the signal 601 consists of a 100 Hz sine wave whose amplitude we wish to measure, plus some 50 Hz hum (causing alternate peaks of the signal to vary in height) and some high frequency interference (causing the peaks to be spiky). These artefacts can be filtered out by the use of a bandpass filter. Different filtering functions can be performed in software by the processor 405. Both the luminance signal and the modulation signal can be filtered to remove unwanted artefacts. The luminance signal may be subjected to a low pass filter 510, while the modulation signal may be subjected to a matched filter 511, i.e. a filter that is configured to detect a modulation at only the frequency of interest. The matched filter 511 is therefore essentially a narrow bandpass filter.

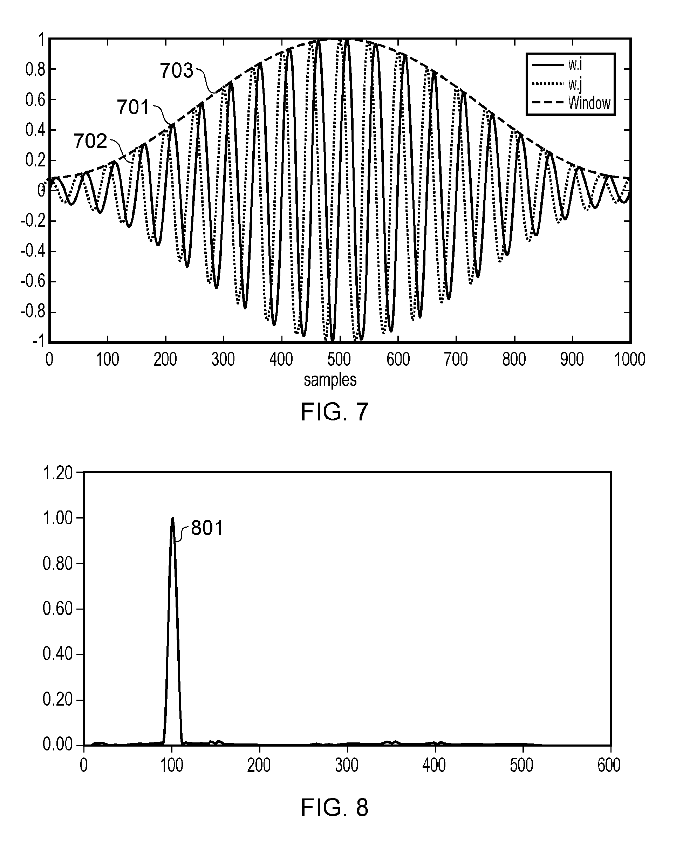

For a 50Hz mains signal, in order to detect the amount of 100 Hz present, representing modulation of the light signal, two windowed basis function signals can be generated by the processor and applied to the filters 510, 511 using a window function 512. As shown in figure 7, a first signal 701 is a sine wave multiplied by the window function 703, while a second signal 702 is a cosine wave multiplied by the same function.

Each signal sample is multiplied by the next value of each of the windowed basis functions and the sums are stored:

$$si = \sum_{n=1}^{N} msig_n \cdot wi_n$$

$$sj = \sum_{n=1}^{N} msig_n \cdot wj_n$$

where $msig_n$ is a sample of the modulation signal, $w_n$ is a sample of the window function, $wi_n$ is a sample of the windowed sine basis function and $wj_n$ is a sample of the windowed cosine basis function.

After N samples have been taken (where N is the length of the window function), these sums are combined to give the signal strength:

$$\mathrm{mod} = \sqrt{si^2 + sj^2}$$

where mod is the measured "modulation" reported to the decision logic 512 (figure 5). The length of the window function may be selected to span samples taken over a period of at least one second.

The above described filter has been found to be very effective at rejecting both the 50 Hz hum and any other noise, as shown by its frequency response in figure 8, indicating a high degree of rejection either side of the desired frequency 801, which in the example shown is 100Hz.

In other embodiments the processor may be configured to measure modulation at other frequencies, for example at 120 Hz in locations where the nominal mains supply is at 60 Hz. Other frequencies may be possible, for example where a lighting system is configured to apply an artificial modulation at a predetermined frequency for the purpose of being able to determine the relative amounts of daylight versus artificial light. This may, for example, be possible with LED-based lighting, whose operation can be modulated over a very wide range of frequencies. The same general principles however will still apply as for the embodiments illustrated herein relating to fluorescent lighting, in which the mains frequency is used for assessing modulation.

For efficiency, multiplications are preferably performed using 24-bit arithmetic and the sums are 32 bit. The use of 24-bit arithmetic is necessary to enable the low cost PIC processor used in this embodiment to keep up with the 10 samples per mains half-cycle, and is appropriate with 10 bit A-D conversion in combination with 8 bit filter coefficients, giving 18 bit results when multiplied. The 24-bit arithmetic may for example be implemented in a combination of C and assembler language.

The luminance signal needs low-pass filtering to reject noise. In order to make the luminance signal directly comparable with the modulation signal (in case the illumination changes during the period where samples are being summed), the luminance signal is preferably summed over the same sampling period using the same window function as used by the modulation signal:

$$lum = \sum_{n=1}^{N} lsig_n \cdot w_n$$

Where lum is the measured luminance value reported to the decision logic, $lsig_n$ is a sample of the luminance signal and $w_n$ is a sample of the window function.

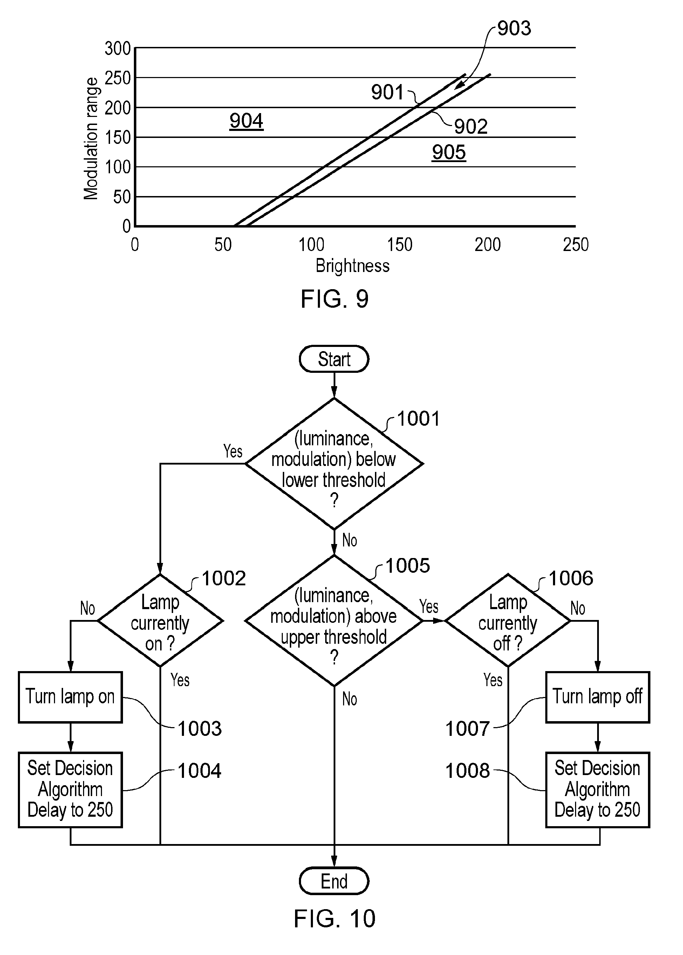

In a simple example, the decision logic 512 component of the processor 405 uses the modulation and luminance values reported by the matched filter 511 to decide if the lamp should be either on or off. The measurements are compared to two thresholds 901, 902, as shown in Figure 9. If the measurements fall into the "hysteresis" region 903 between the lower threshold 901 and the upper threshold 902 then the lamp is left in its current on or off state. This intermediate region 903 prevents the lamp from being switched rapidly on or off due to small fluctuations around the threshold values.

Figure 9 illustrates a two-dimensional modulation and luminance space, which is divided by the upper and lower thresholds 902, 901 into two regions 904, 905. The slope of the lines 901 and 902 reflect the response of the system to increasing amounts of lamp light (when the amount of daylight is unchanging); as the lamp light increases, both the luminance and modulation signals increase, with a relationship as shown by the lines. Hence in the line 901 delineates the border of a region 904, that border line representing a line of a constant amount of daylight, that amount being the maximum amount of daylight for region 904. Similarly line 902 delineates the edge of region 905 with a line of constant daylight, this being the minimum amount of daylight for region 905. In the first region 904, the brightness (luminance) is low but the modulation is high indicating that the amount of daylight is low, indicating that the lamp needs to be on. Therefore, when the luminance and modulation values lie in this first region 904, the lighting controller enables operation of the lamp, i.e. either turns the lamp on or keeps the lamp turned on. In the second region 905, the brightness is high but the modulation is low indicating that the amount of daylight is high, indicating that the lamp does not need to be on because the scene is sufficiently illuminated with natural light. Therefore, when the luminance and modulation values lie in this second region 905, the lighting controller disables operation of the lamp, i.e. either turns the lamp off or keeps the lamp turned off.

An exemplary flow diagram for the decision logic 512 of the processor 405 is shown in figure 10, in which two inputs are compared with two threshold lines of the form shown in figure 9 and the lamp switched on or off, or maintained in its current state, in dependence on the values. In a first step 1001 the luminance and modulation values are compared with the upper and lower thresholds 902, 901. If both values are below the lower threshold 901, a check is made as to whether the lamp is currently on (step 1002). If the lamp is currently on, the process ends. If the lamp is not currently on, the lamp is turned on (step 1003). A decision may then be made to set a delay (step 1004), so that the lamp state is maintained on for a minimum time interval. The minimum time interval may for example be defined as a number of cycles, such as 250 as indicated in the exemplary flow diagram. The length of the window function N may be selected to correspond with the minimum time interval.

If, at step 1001, the luminance and modulation values are not below the lower threshold 901, a check is made at step 1005 to determine whether the luminance and modulation values are above the upper threshold 902. If not, i.e. if the luminance and modulation values lie within the intermediate region 903, the process ends. Otherwise, if the luminance and modulation values are above the upper threshold 902, a check is made at step 1006 to determine whether the lamp is currently off. If the lamp is off, the process ends. If the lamp is on, the lamp is then turned off at step 1007. As with turning the lamp on, a delay may be set at step 1008 to prevent the lamp state from being changed for a set time interval.

In practice, if the modulation or luminance values go too high then the software also goes into a hysteresis state, so as to produce a sensible behaviour if the sensor is overloaded by light. This can be seen in Figure 17 in section 7 where a screen-shot of the program used during calibration is shown.

If the lamp is turned on or turned off then the algorithm may set a "decision algorithm delay" counter used by the main loop (steps 1004 and 1008 in figure 10). This prevents the lamp being turned on or off again for a preset time interval, which will typically be a few seconds. This is to prevent the lamp being turned on and off repeatedly if lighting conditions are changing rapidly. This same counter can also used when the controller is initially switched on, where the lamp is turned off for a set time interval while the system stabilises.

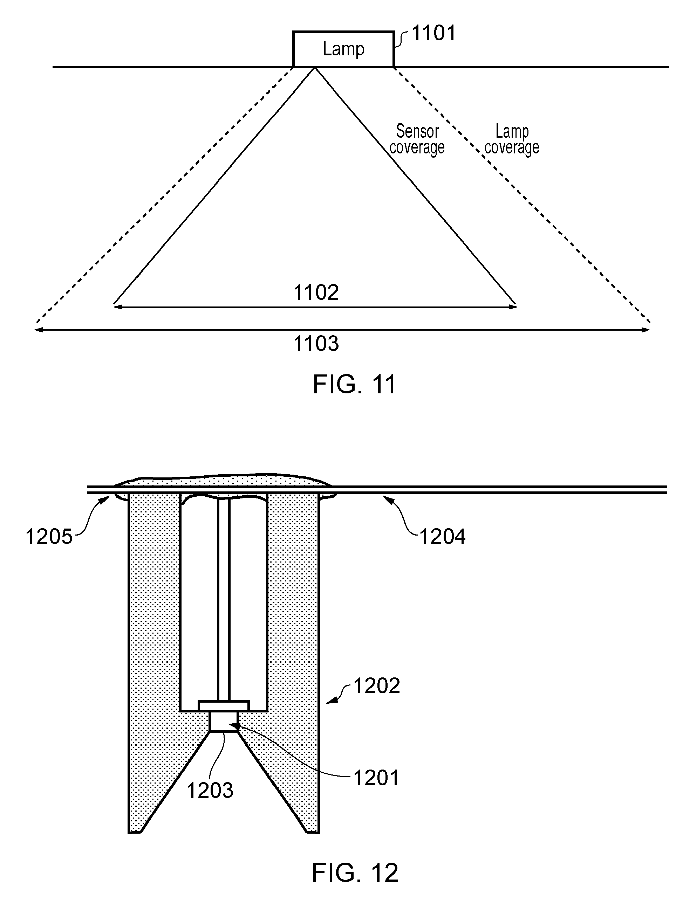

The controller is preferably operated in situations where the area being sensed is also lit by the lamp under control, as shown schematically in figure 11 in which the sensor coverage area 1102 lies entirely within the lamp coverage area. In a general aspect therefore, the light sensing module is preferably positioned and oriented relative to the lamp under control of the control module such that an area illuminated by the lamp is also sensed by the light sensing module. In the embodiment illustrated in figure 11, the light sensing module is incorporated into the lamp assembly. The lighting controller as a whole may also be incorporated into the lamp assembly, or alternatively may be provided external to the lamp assembly with only the light sensing module in the lamp assembly. In certain embodiments, a single lighting controller may be connected to multiple light sensing modules in or adjacent to respective lamp assemblies.

In an exemplary embodiment, a light sensing module may comprise a light sensor such as a phototransistor mounted in an arrangement as illustrated in figure 12. The phototransistor 1201 is mounted in a collimator assembly 1202 such that the phototransistor 1201 senses light arriving from within a restricted region. In the embodiment in figure 12, the restricted region is defined by a concave conical section of the collimator surrounding a light sensing portion 1203 of the light sensor 1201. This type of arrangement allows the light sensor 1201 to be shielded from light emitted directly from an associated lamp assembly, otherwise the light signal would be overloaded by the relatively high brightness from the lamp and prevent the lamp from being turned off. In the embodiment shown, the collimator 1202 is mounted to a printed circuit board 1204 with a mounting material 1205 such as black mastic.

The processor 405 is preferably a PIC (programmable integrated circuit) microcontroller, which will need to be programmed before use. Two different programs may be loaded into the processor: i) runtime software, which operates the controller as described in the sections above; and ii) calibration software, which measures the light parameters as described above but does not operate the triac. When the calibration software is operational, the triac is preferably turned off The LED output may be used as a serial port to report the measured modulation and luminance to an external computer. In practice the runtime and calibration software can be two builds of the same underlying code, built using selective compilation.

An isolator board is preferably used to optically isolate a USB (universal serial bus) connection from the lighting controller in order to protect a connected external computer. The isolator board does not, however, isolate the PIC programming connector. The module should therefore only be programmed with the mains power off and the programmer disconnected before turning the mains power back on.

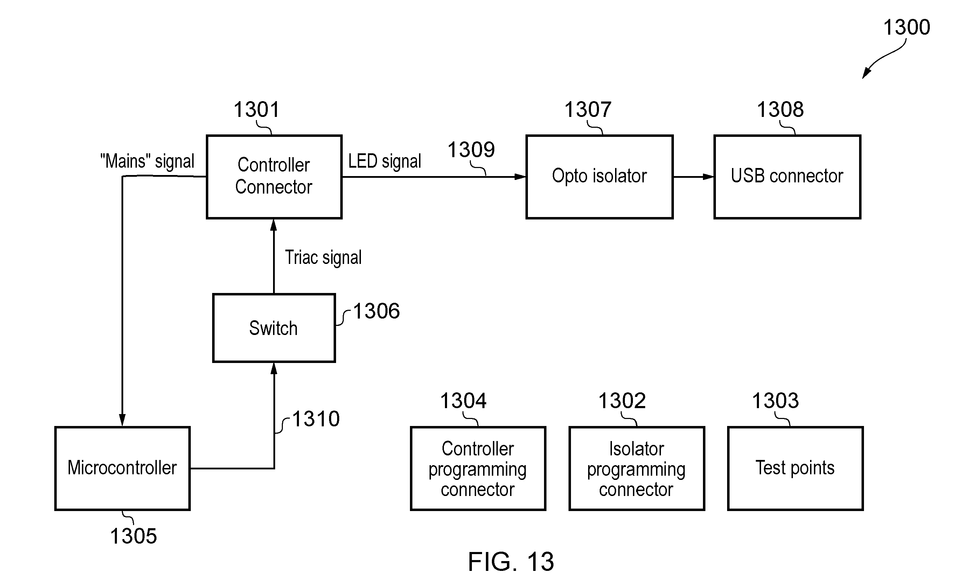

A schematic diagram of an exemplary isolator board 1300 is shown in figure 13. The isolator board 1300 comprises a microcontroller 1305, switch 1306, controller connector 1301, optical isolator 1307, I/O interface 1308, controller programming connector 1304, isolator programming connector 1302 and test point connector 1303.

The connector 1301 connects to the processor being programmed or calibrated via the I/O module 406 (figures 4). The lamp controller's processor 405 drives an output signal 1309 (or LED signal) as an active-low serial signal when programmed with the calibration code. This signal 1309 drives optical isolator 1307, which together with I/O interface 1308 provides an optically isolated serial-over-USB connection to an external connected computer having a suitable serial port emulator driver installed. The USB adapter may be programmed to be self-powered rather than board-powered, which can be done using software provided by the module manufacturer.

Processor 1305 is a PIC that is programmed with a cut-down version of the code used in processor 405. Processor 1305 tracks the mains frequency and produces pulses on its output 1310 in the same way as the main processor 405 that control switch 1306. If switch 1306 is switched on then the load switch 404 in the lighting controller 400 is triggered.

Isolator programming connector 1302 may be used to program processor 1305. Test point connector 1303 and the 0V, 5V test points thereof may be used to bring out useful signal from the lighting controller processor 405 for development purposes. Controller programming connector 1304 enables the processor 405 on the lamp controller 400 to be programmed.

As described previously, initial investigations showed that one set of thresholds should work for many different types of lamp. However, given that lamp parameters can vary, it can be advantageous to have the thresholds optimised for a particular lamp design. A calibration can then be suitable for all lamps made to that design. At present the calibration values are compiled into the code, but the values could alternatively be programmed into the processor's EEPROM memory if preferred.

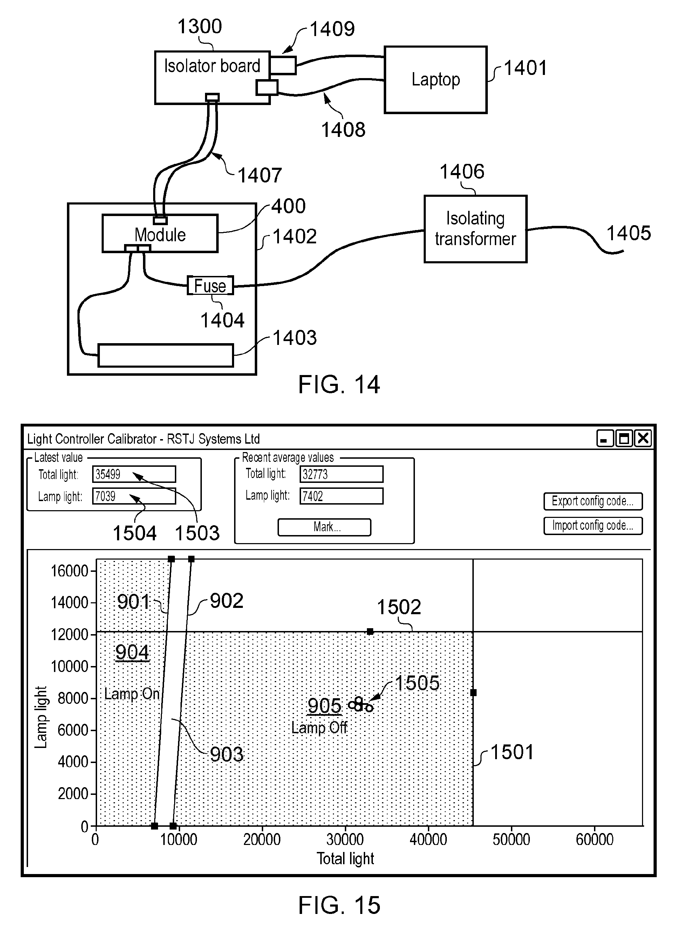

Figure 14 illustrates a schematic arrangement of an external computer 1401 such as a laptop connected to a lighting controller 400 in a lamp assembly 1402 via an isolator board 1300 for calibration and programming of the lighting controller 400. The lamp assembly 1402 comprises a lamp 1403 connected to the lighting controller 400 and a fuse 1404 connecting the assembly 1402 to a mains supply 1405, preferably via an isolating transformer 1406. The lighting controller 400 is connected to the isolator board 1300 via a ribbon cable 1407 connecting the connector X2 in the I/O module 406 (see figures 4 and 4f) to the connector 1301 (see figure 13) in the isolator module 1300. The isolator board 1300 is connected to the external computer 1401 via a USB lead 1408. The isolator board comprises a PIC programmer 1409, which is also connected to the external computer 1401.

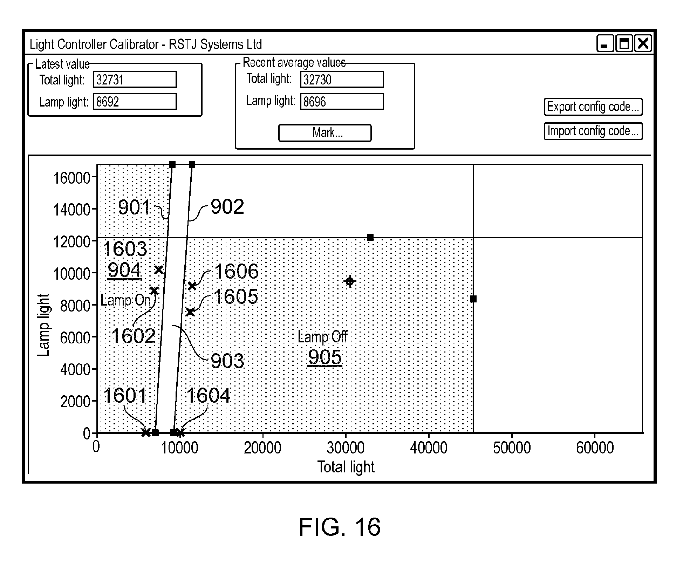

To perform a calibration routine, a visual representation of the thresholds may be used on the computer 1401, as illustrated in the screenshots of figures 15 and 16. In these screenshots, the modulation range and brightness axes in figure 9 are plotted in the form of lamp light (derived from measured modulation) and total light (luminance). The upper and lower thresholds 902, 901 are indicated, with the intermediate region 903 between the thresholds 902, 901. A first region 904 defines the 'lamp on' region, and a second region 905 defines a 'lamp off' region. Further thresholds may be defined based solely on modulation and on luminance, in order to define upper limits beyond which the lighting controller does not operate. In figure 15, these upper limits are defined by a luminance threshold 1501 and a lamp light, or modulation, threshold 1502, each of which can be defined by a single value. These values can be adjusted within the software on the computer.

The visual representation on the computer provides an indication of the total measured light 1503 and the derived lamp light 1504, which can be plotted as points 1505 on the lamp light / total light chart. The points 1505 may show instantaneous values and/or running average values.

To perform a calibration, all artificial light is first turned off, and the amount of daylight adjusted (for example by adjusting window blinds) until the amount of daylight is perceived or independently measured to be just sufficient, i.e. is at the threshold where a lamp would be turned on manually or at which relevant regulations or recommendations stipulate that the lighting level is at the minimum acceptable brightness. The readings on the visual representation should then be along the total light axis of the chart, since there should be no detected modulation of the received light. A mark 1601 (see figure 16) can then be made. The lamp is then turned on by operating switch S1 on the isolator board 1300. The readings should then move upwards and to the right on the chart, at which point the position can be marked again, indicated by marks 1602, 1603. More than one mark may be obtained as the lamp gradually increases in brightness as it warms up. After letting more daylight in, the process is repeated, obtaining further marks 1604 with the lamp off and marks 1605, 1606 with the lamp on. The upper and lower threshold lines 902, 901 can then be set such that they define an intermediate region 903 that divides the marks 1601-3 and 1604-6 as indicated in figure 16, defining the 'lamp on' region 904 and the 'lamp off' region 905.

The upper limits 1501, 1502 may be defined by exposing the sensor to increasing amounts of lamp light until the lamp light readings begin to fall off, indicating that the light sensor is saturated. As this is done, the readings will first move into the region above line 1502, and then with yet more light will drop off to the right of line 1501. The upper luminance limit 1501 can then be set such that all lamp light readings below this limit are within the range of the light sensor. The upper lamp light limit can be set by defining a limit below which all readings are obtained. The limits thereby ensure that the lighting controller does not change the state of the lamp when the readings are outside the ranges defined by the first and second regions 904, 905 and the limits 1501, 1502.

The above description is based on control of a fluorescent lamp. The same approach should work equally well for LED and incandescent lamps, which provide different degrees and types of light modulation, resulting in different thresholds being required. The lighting controller can, however, be adjusted to account for different modulation frequencies and differently defined thresholds, allowing the controller to be used for these other types of lighting.

The lighting controller may be provided as a stand-alone unit that may be configured to be calibrated according to the type of lamp assembly it is connected to. The lighting controller may alternatively be provided as part of a lamp assembly, with the controller pre-calibrated to the type of assembly. A further alternative is to provide a controller with predefined electronic or manual switches to define a limited number of common alternative types of lighting, which will allow a single controller to be installed with multiple types of pre-existing lamp assemblies.

If a lamp assembly contains an electronic ballast, the lighting controller sensor could be combined with the electronic ballast, sharing its power supply and controlling the lamp through the ballast controller's inhibit function. A further alternative is to allow automated switching by switching the mains power on and off rapidly as is typically done with PIR lamps. Alternatively such an override might be achieved by providing an infrared remote control.

Dimming operation may also be possible using a lighting controller as described herein. Such systems have generally been found to require expert installation because of the way one light affects another. However it is likely that the ability to discriminate between daylight and lamp light could alleviate this problem.

The lighting controller may also form part of a more complex lighting system incorporating movement detectors.

A lighting quality indicator device according to an embodiment may be similar to the example lamp controller, but omit the features that are necessary to control the lamp. The indicator module in such cases may be used to indicate a measure of the quality of the ambient light. The quality of the ambient light may be determined based on the proportion or amount of modulation detected. In some embodiments, the sensor module may comprise further sensors, for detecting the colour of the ambient light, The measure of the colour of the light and the amount or proportion of modulation may be combined by the processor to determine a measure of overall light quality. The indicator module may display a quantitative indication (such as a numeric value or dial) that indicates the measure of quality, or may indicate when a threshold value of quality has been reached.

Other embodiments are intentionally within the scope of the invention as defined by the appended claims.

**References**

1. A J Wilkins & C Clark, Modulation of light from fluorescent lamps, Lighting Res. Technol. 22(2), 1990, pp103-109.
2. Juri V. Jatskevich & Oleg Wasynczuk, An investigation of flicker reduction using an adaptive VAR compensator, Purdue University School of Electrical Engineering, TR-ECE 97-7, 1997.
3. Alexander E. Emanuel & Lorenzo Peretto, A Simple Lamp-Eye-Brain Model for Flicker Observations, IEEE Transactions on Power Delivery, Vol. 19, No. 3, July 2004, pp1308-1313.
4. Commercial Buildings Energy Consumption Survey, Energy Information Administration, http://www.eia.doe.gov/emeu/cbecs/cbecs2003/lighting/lightingl.html, accessed 26 May 2011.
5. JP2004234910 (Matsushita Electric Works Limited)
6. JPH11339972 (Toshiba Lighting & Technology Corporation)
7. JPH0896968 (Matsushita Electric Works Limited)
8. WO 2008/122847 (Sony Ericsson Mobile Communications AB)

**Claims**

1. A lighting controller, comprising:

   a light sensing module for receiving ambient light and providing a modulation signal indicating a degree of modulation of the received ambient light and a luminance signal indicating a brightness of the ambient light;
   a control module for controlling operation of a lamp; and
   a processor arranged to receive the modulation and luminance signals from the light sensing module and to operate the control module dependent on the received signals.

2. The lighting controller of claim 1 wherein the processor is configured to provide a signal to the control module to disable operation of the lamp when the received luminance signal is above a predetermined luminance threshold and the received modulation signal is below a modulation threshold.

3. The lighting controller of claim 2 wherein the processor is configured to provide a signal to the control module to enable operation of the lamp when the luminance signal is below the predetermined luminance threshold.

4. The lighting controller of claim 1 wherein the processor is configured to compare the modulation and luminance signals to a threshold defined by a relationship between modulation and luminance that divides a two dimensional space into first and second regions, the processor being configured to provide a signal to disable operation of the lamp when a point in the two dimensional space defined by the modulation and luminance signals lies within the first region and to provide a signal to enable operation of the lamp when a point in the two dimensional space defined by the modulation and luminance signals lies within the second region.

5. The lighting controller of claim 4 wherein the threshold comprises first and second thresholds defining a third region between the first and second thresholds, wherein the processor is configured to maintain the lamp in its current operational state when a point in the two dimensional space defined by the modulation and luminance signals lies within the third region.

6. The lighting controller of any preceding claim wherein the processor is configured to repeatedly sample the modulation and luminance signals and provide a signal to the switching module dependent on the sampled modulation and luminance signals.

7. The lighting controller of claim 6 wherein the processor is configured to sample the modulation and luminance signals a plurality of times over each half cycle of an alternating mains voltage signal.

8. The lighting controller of any preceding claim wherein the processor is configured to maintain a current state of the lamp when the modulation signal is above a predetermined upper modulation limit or when the luminance signal is above a predetermined upper luminance limit.

9. The lighting controller of any preceding claim, wherein the processor is configured to perform a bandpass filtering operation on the modulation signal to select a frequency of interest.

10. The lighting controller of claim 9, wherein the filtering operation comprises performing a windowed Fourier transform.

11. A method of operating a lamp, the method comprising:

providing a lighting controller according to any preceding claim, the lighting controller connected to the lamp;
receiving ambient light by the light sensing module
providing a modulation signal indicating a degree of modulation of the received ambient light and a luminance signal indicating a brightness of the ambient light by the light sensing module;
receiving the modulation and luminance signals from the light sensing module by the processor; and
operating the control module by the processor to controlling operation of the lamp.

12. A method of calibrating a lighting controller according to any one of claims 1 to 10, the method comprising:

connecting the lighting controller to a lamp and to a computer via an interface;
adjusting an amount of natural light sensed by the light sensing module while the lamp is switched off and switched on;
identifying points on a two dimensional space of modulation and luminance;
defining a first region and a second region on the two-dimensional space within the identified points to determine thresholds for controlling operation of the lamp; and
programming the thresholds into the lighting controller by the computer.

FIG. 1

FIG. 2

FIG. 3

FIG. 4

EP 2 894 947 A1

FIG. 5

FIG. 6

FIG. 7

FIG. 8

FIG. 9

FIG. 10

Lamp ⌐1101

Sensor coverage

Lamp coverage

1102

1103

FIG. 11

1205

1204

1202

1203

1201

FIG. 12

EP 2 894 947 A1

1300

1301

"Mains" signal

Controller
Connector

1309
LED signal

1307

Opto isolator

1308

USB connector

Triac signal

Switch

1306

1310

Microcontroller

1305

1304

Controller
programming
connector

1302

Isolator
programming
connector

1303

Test points

FIG. 13

FIG. 14

FIG. 15

FIG. 16

**EUROPEAN SEARCH REPORT**

Application Number

EP 14 15 1198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/093191 A2 (KONINKL PHILIPS ELECTRONICS NV [NL]; KRIJN MARCELLINUS P C M [NL]; VAN) 30 July 2009 (2009-07-30) * the whole document * | 1-6,8, 11,12 | INV. H05B37/02 F21S8/00 |
| A | DE 44 28 278 C1 (RADINGER CHRISTOPH [DE]) 21 September 1995 (1995-09-21) * the whole document * | 1-12 | |

TECHNICAL FIELDS SEARCHED (IPC)

H05B
F21S

The present search report has been drawn up for all claims

| Place of search | Date of completion of the search | Examiner |
|---|---|---|
| Munich | 21 May 2014 | Burchielli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                  EP 14 15 1198

This annex lists the patent family members relating to the patent documents cited in  the above-mentioned European search report.
The members are as contained in the European Patent Office EDP file on
The European Patent Office is in no way liable for these particulars which are merely given for the purpose of information.

21-05-2014

| Patent document cited in search report | | Publication date | Patent family member(s) | Publication date |
|---|---|---|---|---|
| WO 2009093191 | A2 | 30-07-2009 | NONE | |
| DE 4428278 | C1 | 21-09-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004234910 B
- WO 2008122847 A1
- JP H11339972 B
- JP H0896968 B
- WO 2008122847 A

**Non-patent literature cited in the description**

- **A J WILKINS ; C CLARK.** Modulation of light from fluorescent lamps. *Lighting Res. Technol.,* 1990, vol. 22 (2), 103-109
- **JURI V. JATSKEVICH ; OLEG WASYNCZUK.** An investigation of flicker reduction using an adaptive VAR compensator. *Purdue University School of Electrical Engineering, TR-ECE 97-7,* 1997
- **ALEXANDER E. EMANUEL ; LORENZO PERETTO.** A Simple Lamp-Eye-Brain Model for Flicker Observations. *IEEE Transactions on Power Delivery,* July 2004, vol. 19 (3), 1308-1313
- Commercial Buildings Energy Consumption Survey. Energy Information Administration, 26 May 2011